# FASCICULE DE BREVET EUROPEEN

(11) **EP 0 993 252 B1**
(45) Date de publication et mention de la délivrance du brevet: **23.04.2003**
(21) Numéro de dépôt: 98933692.0
(22) Date de dépôt: 23.06.1998
(51) Int. Cl.: A23G 1/21, A23G 1/28, B29C 41/14, B29C 41/42, B29C 41/46

(54) **PROCEDE ET INSTALLATION POUR LE MOULAGE PAR TREMPAGE DE PIECES DIVERSES**
VERFAHREN UND EINRICHTUNG ZUM TAUCHFORMEN FÜR DIVERSE WERKSTÜCKE
METHOD AND INSTALLATION FOR DIP MOULDING VARIOUS PIECES

(30) Priorité: 24.06.1997 FR 9708172
(43) Date de publication de la demande: 19.04.2000
(73) Titulaire: RICHARD, Jean-Pierre, 69270 Rochetaillée-sur-Saône (FR)
(72) Inventeur: RICHARD, Jean-Pierre, 69270 Rochetaillée-sur-Saône (FR)
(74) Mandataire: Thibault, Jean-Marc
(86) Numéro de dépôt international: FR9801320
(87) Numéro de publication internationale: WO98058547

(56) Documents cités:
- DE-C- 722 924
- FR-A- 2 604 651
- GB-A- 2 078 155
- US-A- 2 638 632

## Description

### DOMAINE TECHNIQUE :

L'invention concerne le domaine technique du moulage par trempage de pièces de formes diverses.

De manière connue, cette technique consiste à tremper un moule refroidi dans un bain de matière fondue, pour après extraction du moule hors du bain, solidifier une épaisseur de matière recouvrant la surface du moule et former ainsi une pièce.

Dans une application préférée mais non exclusive, l'invention vise la mise en oeuvre de cette technique pour la fabrication de pièces de confiserie, telles que par exemple des coquilles ou coques en chocolat destinées à être fourrées.

### TECHNIQUE ANTERIEURE :

Le brevet FR 2 604 651 décrit un exemple d'installation pour la fabrication automatisée de pièces creuses ou de coques.

Selon ce document, l'installation comporte un bain tempéré de chocolat à l'intérieur duquel les moules d'un bloc de moulage sont plongés temporairement au moyen d'un bras animé d'un mouvement de translation verticale. Le bloc de moulage comprend un châssis creux pourvu, sur une face inférieure, d'une série de moules saillants. Le châssis porte-moule délimite une chambre de distribution suivie d'une enceinte de mélange qui communique avec les moules creux, de manière à permettre la circulation d'un gaz de refroidissement. Chaque moule creux comporte, enfin, un orifice d'éjection du gaz de refroidissement pour assurer, notamment, le démoulage d'une pièce de chocolat formée à la surface du moule.

Cette installation de moulage de pièces en chocolat par trempage fonctionne de la manière suivante.

Tout d'abord, les moules sont refroidis par l'injection d'un gaz de refroidissement formé par de l'air sec réfrigéré au moyen d'un échangeur à azote liquide. Pendant l'injection de l'air de refroidissement, ce dernier circule à l'intérieur du châssis et s'échappe par les orifices d'éjection des moules creux. Lorsque le moulage des pièces est souhaité, l'injection d'air est interrompue et le bloc de moulage est descendu vers le bain de chocolat de manière à y faire tremper la surface externe des moules saillants. Ensuite, les moules sont retirés du bain de chocolat, de sorte que leur surface externe est alors recouverte d'une pellicule de chocolat qui se solidifie en se refroidissant au contact des moules. Après solidification totale, il est placé sous le bloc de moulage, un plateau de réception sur lequel sont déposées les coques de chocolat ainsi formées et démoulées au moyen d'une injection d'air de refroidissement s'échappant par les orifices d'éjection des moules et agissant sur les coques moulées.

L'installation ci-dessus et son mode de fonctionnement permettent une fabrication de qualité de coques en chocolat. Toutefois, la technique particulière mise en oeuvre présente un certain nombre d'inconvénients qu'il conviendrait de pouvoir corriger.

En effet, la production d'air froid fait intervenir une installation cryogénique fonctionnant à partir de la détente d'azote liquide. Or, l'azote liquide est une source de froid particulièrement onéreuse. De plus, le refroidissement actif des moules, obtenu par la circulation de l'air refroidi, n'est possible que pendant certaines phases du fonctionnement de l'installation, de sorte qu'il n'est pas possible d'augmenter la cadence de fonctionnement de l'installation en raison du temps de refroidissement des moules entre deux trempages. De plus, l'abaissement de la température de l'air de refroidissement, afin de réduire le temps de mise en température des moules, entraîne l'apparition d'un phénomène de condensation et de givrage qui implique une obligation d'arrêt temporaire de l'installation pour procéder à son dégivrage.

### EXPOSE DE L'INVENTION :

Il apparait donc le besoin de disposer d'un nouveau procédé de trempage qui permette d'obvier aux inconvénients ci-dessus et de réduire les coûts d'exploitation de l'installation.

Pour atteindre ces objectifs, l'invention propose un procédé de moulage par trempage du type consistant à :
- plonger ou à tremper temporairement dans un bain de matière fondue au moins un moule refroidi par un fluide,
- extraire le moule hors du bain pour solidifier sur la surface externe du moule une épaisseur de matière formant une pièce moulée,
- et à démouler la pièce en la soumettant à l'action d'un fluide sortant par au moins un orifice débouchant à la surface externe du moule.

Selon l'invention, ce procédé est caractérisé en ce qu'il consiste :
- à refroidir le moule par la circulation, dans un circuit étanche, d'un fluide réfrigérant,
- et à démouler la pièce au moyen d'un fluide de démoulage fourni par un circuit d'alimentation distinct du circuit étanche pour le fluide réfrigérant.

Par ailleurs, il est apparu que l'installation selon l'art antérieur et plus particulièrement le bloc de moulage, ne sont pas conçus pour mettre en oeuvre le procédé selon l'invention. Un autre objectif de l'invention est donc de proposer un nouveau bloc de moulage dont la mise en oeuvre permet d'atteindre le but, poursuivi par l'invention, de réduction des coûts d'exploitation d'une installation de moulage par trempage.

Un autre objet de l'invention est donc de proposer un nouveau bloc de moulage du type comportant :
- un châssis porteur pourvu, sur une face inférieure, d'au moins un moule saillant qui possède, au niveau de sa surface externe, des moyens de sortie d'un fluide pour le démoulage,
- un circuit de refroidissement dans lequel est destiné à circuler un fluide pour assurer le refroidissement du moule,
- et un circuit d'alimentation en fluide des moyens de sortie.

Selon l'invention, ce nouveau bloc de moulage est caractérisé en ce que
- le circuit de refroidissement est conçu pour constituer un circuit étanche destiné à être raccordé à une source de fluide réfrigérant,
- et en ce que le circuit d'alimentation forme un circuit distinct du circuit de refroidissement, et destiné à être raccordé à une source de fluide de démoulage.

Par ailleurs, il est apparu le besoin de disposer d'une installation présentant une modularité suffisante pour permettre la production en petite série de pièces de formes différentes sans nécessiter une modification lourde et onéreuse de ladite installation.

Un autre objet de l'invention est donc de proposer un nouveau bloc facilement démontable pour être remplacé par un bloc du même type présentant des moules de forme différente.

Pour atteindre cet objectif, l'invention porte également sur un nouveau bloc de moulage selon l'invention, caractérisé en ce qu'il comporte :
- des moyens d'adaptation amovibles du châssis sur un élément complémentaire de l'installation de moulage,
- des moyens de raccord amovibles, d'une part, du circuit de refroidissement avec la source de fluide réfrigérant et, d'autre part, du circuit d'alimentation avec la source de fluide de démoulage.

Un autre objet de l'invention vise une installation de moulage par trempage qui comporte un nouveau bloc de moulage selon l'invention pour la mise en oeuvre du procédé conforme à l'invention.

### BREVE DESCRIPTION DES DESSINS :

La **fig. 1** est une vue d'ensemble d'une installation pour la mise en oeuvre du procédé conforme à l'invention.

La **fig. 2** est une coupe transversale partielle d'un bloc de moulage selon l'invention.

Les **fig. 3** et **4** sont des coupes analogues à la **fig. 2** présentant des variantes de réalisation du bloc de moulage.

### MEILLEURE MANIERE DE REALISER L'INVENTION :

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

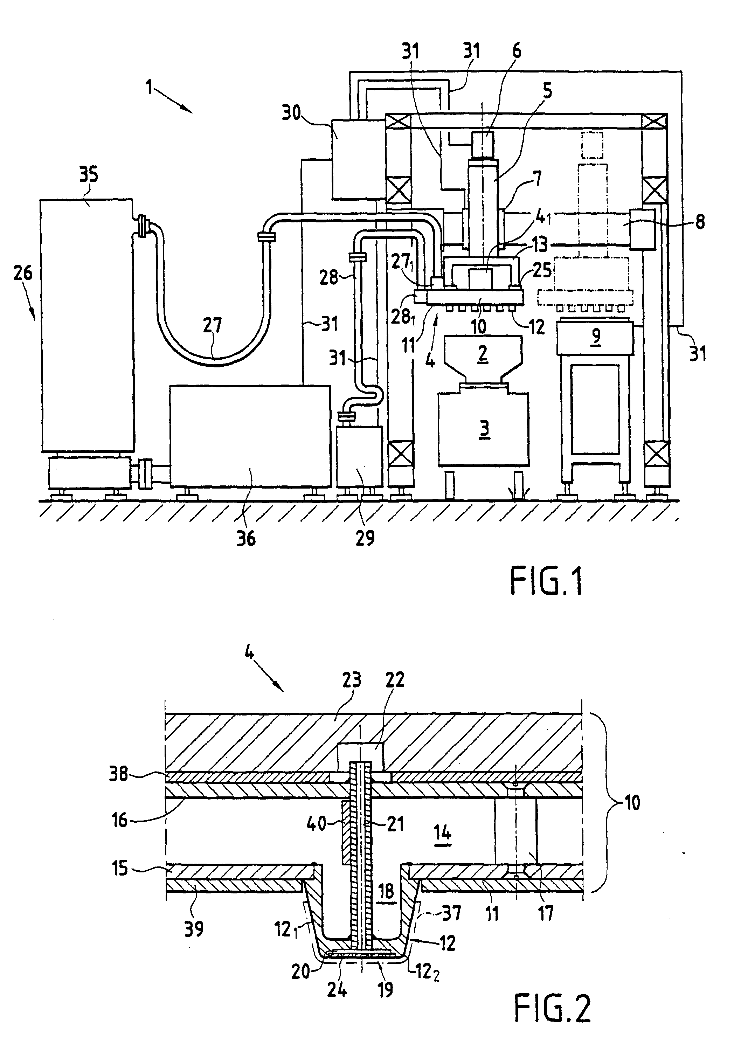

Une installation de moulage par trempage, telle que désignée dans son ensemble par la référence **1** à la **fig. 1**, comprend un bain de matière fondue contenue et maintenue à température idoine dans un bac **2** ouvert sur le dessus et équipé de moyens de brassage et de maintien en température. Une tempéreuse **3** alimente le bac **2** en matière fondue placée dans des conditions physico-chimiques adaptées à son moulage. L'installation **1** comprend également un bloc de moulage **4** qui selon l'invention, est adapté à l'extrémité d'un bras **5** mobile en translation verticale. Ce bras **5** est déplacé par des moyens moteurs **6**, tels que par exemple un vérin pneumatique ou encore un vérin à vis entraîné par un moteur électrique. Le bras **5** est porté par un chariot **7** mobile en translation horizontale, sur une poutre **8**, et par des moyens moteurs, tels que par exemple un vérin pneumatique ou un vérin à vis entraîné par un moteur électrique. L'ensemble de support et de transport du bloc de moulage **4**, constitué par le bras **5** et le chariot **7** mobile sur la poutre **8**, permet de déplacer le bloc **4** entre une position de trempage à l'intérieur du bac **2** et une position de démoulage au-dessus d'un tapis transporteur **9** situé à côté du bac **2**. Bien entendu, l'ensemble de support et de transport pourrait être réalisé sous une toute autre forme pour permettre des déplacements du bloc de moulage **4** conformément à sa fonction assumée dans l'installation **1**.

Selon l'invention, le bloc de moulage **4** est constitué d'un châssis porteur **10** qui est pourvu sur une face inférieure **11,** d'au moins un et de préférence, plusieurs moules **12** saillants. Le châssis porteur **10** est adapté à l'extrémité du bras vertical **5**, par une tête d'adaptation **13**.

Conformément à une première forme de réalisation du bloc porte-moule **4**, illustrée à la **fig. 2**, le châssis porteur **10** comporte une enceinte étanche **14** qui est délimitée par deux plaques parallèles, dites inférieure **15** et supérieure **16,** liées par des entretroises **17** et raccordées à leur périphérie par un bandeau non représenté. La plaque inférieure **15** porte sur sa face externe, les moules saillants **12**.

Selon l'exemple illustré, chaque moule **12** est engagé dans un alésage complémentaire de la plaque inférieure **15** sur laquelle il est fixé à demeure par des moyens étanches de collage ou de soudure. Chaque moule **12** est creux et délimite une chambre **18** ouverte vers l'enceinte **14** pour définir avec cette dernière, un circuit étanche de passage d'un fluide réfrigérant comme cela apparaîtra par la suite. Conformément à sa fonction, chaque moule présente une face extérieure **12**_{**1**} qui possède un angle de dépouille adapté au démoulage des pièces à fabriquer. Enfin, chaque moule **12** possède des moyens **19** de sortie d'un fluide de démoulage qui débouchent à la surface externe du moule. Selon une forme de réalisation préférée, ces moyens de sortie **19** sont constitués par une chambre d'éjection **20** débouchant sur la face inférieure **12**_{**2**} du moule. Cette chambre d'éjection **20** est raccordée, par un conduit **21** traversant la chambre **18** et l'enceinte **14,** à un circuit **22** de distribution du fluide de démoulage, ménagé dans une plaque **23** adaptée sur la plaque supérieure **16**. Le circuit de distribution **22** et le conduit **21** de chaque moule définissent alors un circuit d'alimentation en fluide de démoulage distinct du circuit étanche **14, 18** pour le fluide réfrigérant. De préférence, la chambre d'éjection **20** est équipée, au niveau de la face inférieure **12**_{**2**}**,** d'une grille de répartition **24**.

Le bloc de moulage **4** ainsi constitué est de préférence fixé de manière amovible sur la tête d'adaptation **13** au moyen, par exemple, de brides **25**, associées à des éléments de visserie. Le circuit de refroidissement **14, 18** est raccordé à une source de fluide réfrigérant **26** par une canalisation **27** souple ou tout au moins déformable, de manière à pouvoir suivre les déplacements du bloc **4**. De même, le circuit de distribution **22** est raccordé par une canalisation déformable **28** à une source **29** de fluide de démoulage. Afin de permettre un démontage rapide du bloc **4**, le circuit de refroidissement **14, 18** et le circuit d'alimentation **23, 21** sont connectés à leur canalisation respective par des moyens **27**_{**1**}**, 28**_{**1**} de raccord amovible du type raccord rapide à clapet anti-fuite ou analogue. Une telle disposition de l'invention permet d'éviter des pertes de fluide réfrigérant pendant les opérations de changement du bloc de moulage.

Enfin, l'installation **1** comporte un bloc de commande **30** raccordé par des lignes **31** à la source de fluide réfrigérant **26,** à la source de fluide de démoulage **29,** aux moyens de déplacement du bras **5** et du chariot **7,** et au convoyeur **9,** de manière à assurer le fonctionnement coordonné des différents éléments constitutifs de l'installation **1.** Le bloc **30** assure de la manière suivante, le fonctionnement de l'installation **1,** conformément au procédé selon l'invention.

Les moules **12** du bloc **4** sont refroidis par la circulation du fluide réfrigérant à l'intérieur du circuit de refroidissement **14, 18.** Dans le cadre d'une application préférée de l'invention au moulage de pièces en chocolat, les moules **12** sont refroidis à une température, de préférence, comprise entre - 5 et + 5° C. Le fluide réfrigérant peut être constitué par de l'eau glycolée circulant en boucle fermée entre le bloc **4** et un échangeur **35** en relation avec un groupe frigorifique **36**. La canalisation **27** définit alors un circuit d'amenée et un circuit de retour raccordés respectivement à une canalisation d'entrée et à une canalisation de sortie du circuit de refroidissement ménagé dans le châssis porteur **10.** La circulation du fluide réfrigérant en boucle fermée dans un circuit étanche évite avantageusement des pertes de fluide réfrigérant et contribue donc à la réduction du coût d'exploitation de l'invention.

Le bloc **4** est ensuite descendu par le bras **5,** de manière à plonger les moules **12** refroidis dans le bac **2** contenant un bain de chocolat fondu maintenu à température idoine. Après ce trempage, le bloc **4** est relevé pour extraire les moules hors du bain et permettre la solidification, sur la surface externe des moules refroidis, d'une épaisseur de chocolat qui s'y est déposée. Cette solidification donne naissance à une coque en chocolat **37,** tel que représentée en trait mixte à la **fig. 2,** autour du moule **12.**

Le bloc **4** est alors déplacé en translation horizontale par le chariot **7** pour être positionnée au-dessus du convoyeur **9.** Puis, le bloc **4** est descendu de manière à placer les coques **37** en contact avec le tapis à l'arrêt du convoyeur **9.** Le bloc **30** commande alors la source **29** de fluide de démoulage pour déclencher une injection de fluide qui est éjecté par la grille **24.** Sous cette action, la coque **37** est désolidarisée du moule **12** et déposée sur le tapis du convoyeur **9.** Le fluide de démoulage mis en oeuvre est de préférence mais non exclusivement, de l'air sec fourni à une pression, de préférence, comprise entre 1,5 x 10⁵ et 5 x 10⁵ Pa.

Après démoulage, le bloc **30** interrompt l'injection de fluide de démoulage, déclenche le fonctionnement du convoyeur pour diriger les pièces moulées vers un poste de reprise et de traitement. Le bloc **30** commande ensuite le déplacement des moyens de support et de transport du bloc **4,** de manière à assurer un nouveau cycle de fabrication de coques en chocolat.

De manière préférée, lorsqu'il est souhaité fabriquer des pièces fines, les moules **12** subissent un égoutage à leur sortie du bain de matière fondue. A cette fin, l'installation comprend un dispositif **4**_{**1**} de mise en vibration du bloc **4**, tel que par exemple un vibreur à excentrique ou analogue. Le bloc de commande **30** pilote alors le fonctionnement temporaire du dispositif **4**_{**1**} pour que les vibrations du bloc **4** soient maximales au moment de la sortie des moules hors du bain. Le fonctionnement du dispositif de mise en vibration est ensuite interrompu et l'installation poursuit son cycle de fonctionnnement comme cela a été décrit plus haut.

Par ailleurs, la mise en oeuvre du dispositif **4**_{**1**} de mise en vibration n'est pas nécessaire lorsque les pièces à fabriquer doivent posséder une épaisseur relativement importante.

Le procédé et l'installation de moulage par trempage conformes à l'invention présentent l'avantage d'assurer un refroidissement des moules au moyen d'un circuit étanche, de sorte qu'il est possible de recycler le fluide réfrigérant et donc de diminuer les coûts d'exploitation de l'installation **1**. De plus, l'existence d'un circuit de refroidissement étanche autorise la mise en oeuvre d'un liquide réfrigérant qui présente une chaleur massique supérieure à celle d'un gaz et permet donc d'accélérer le refroidissement et l'absorption de la chaleur des pièces moulées, réduisant ainsi la durée globale d'un cycle de fabrication. Cette réduction autorise alors une augmentation de la cadence de l'installation ce qui contribue également à réduire son coût d'exploitation. Enfin, la dissociation du circuit de réfrigération et du circuit d'alimentation en fluide de démoulage entraînant une dissociation des fonctions des fluides mis en oeuvre par l'installation, autorise l'utilisation comme fluide de démoulage, d'un gaz qui ne doit pas être préalablement refroidi. De plus, cette dissociation rend indépendants les cycles d'alimentation en fluide de démoulage et de circulation du fluide de refroidissement.

Afin d'améliorer le refroidissement des moules **12,** une variante du procédé prévoit d'assurer une circulation du fluide réfrigérant au moins pendant le trempage, moment où l'apport en chaleur au niveau des moules est le plus important. Dans le même sens, une autre variante du procédé prévoit une circulation en continu du fluide réfrigérant. Bien entendu, quel que soit le mode de circulation du fluide réfrigérant retenu, le procédé selon l'invention assure le maintien des moules à une température adaptée pour permettre un moulage par trempage offrant les meilleures garanties d'efficacité et de qualité des pièces fabriquées.

Selon une variante de réalisation du bloc **4** et afin d'assurer un meilleur rendement du circuit de refroidissement, le châssis **10** comporte une feuille **38** de matériau isolant interposée entre la plaque supérieure **16** et la plaque de répartition **23.** De même, les côtés du bloc de moulage **4** et la face externe de la plaque inférieure **15** sont recouverts d'un matériau isolant **39** ne couvrant, bien entendu, pas les moules **12.** La mise en oeuvre du matériau isolant et, notamment, la couverture partielle des faces extérieures du châssis **10,** contribuent à réduire l'apparition d'un phénomène de condensation et éventuellement de givre à la surface de ce dernier. Or, la condensation et le givrage au sein de l'installation **1** entraînent des risques de dysfonctionnement de cette dernière et nuisent à la qualité des pièces fabriquées. La mise en oeuvre du matériau isolant contribue donc à fiabiliser le fonctionnement de l'installation et à en réduire par là même le coût d'exploitation.

De même, pour renforcer l'efficacité du refroidissement des moules par la circulation du fluide réfrigérant, l'enceinte étanche **14** présente des perturbateurs **40** qui dévient le flux de fluide réfrigérant en direction des chambres **18** des moules, afin d'y favoriser le renouvellement dudit fluide réfrigérant.

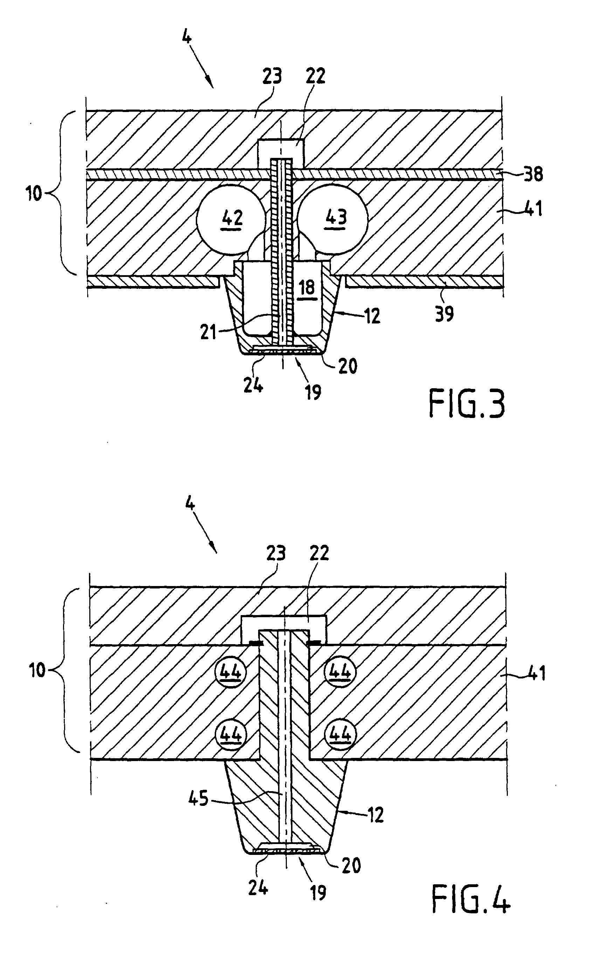

La **fig. 3** présente une autre forme de réalisation du bloc de moulage qui diffère de celle illustrée à la **fig. 2**, en ce que les moules **12** sont portés par une plaque massive **41** à l'intérieur de laquelle sont définis des conduits d'amenée **42** et de retour **43** du fluide réfrigérant auxquels est reliée chaque chambre **18** des moules **12.**

La **fig. 4** illustre une autre forme de réalisation du bloc de moulage **4** selon laquelle les moules **12** sont portés par une plaque massive **41** à l'intérieur de laquelle sont ménagés des canaux **44** formant le circuit étanche pour le fluide réfrigérant. Les moules pleins sont alors enchâssés dans un logement complémentaire de la plaque et présentent uniquement un conduit axial **45** d'alimentation des moyens de sortie **19** du fluide de démoulage. Selon cette variante, le refroidissement des moules est assuré par simple conduction thermique sans contact direct entre le moule et le fluide réfrigérant.

Pour favoriser ce phénomène de conduction thermique, les moules **12** et la plaque massive porte-moule **41** sont réalisés en un matériau présentant un bon coefficient de conduction thermique, tel que par exemple un métal et plus particulièrement, de l'aluminium ou encore du cuivre.

Par ailleurs, quelle que soit la forme de réalisation du bloc **4**, les moules **12** sont réalisés dans un matériau présentant un coefficient de conduction thermique élevé.

Dans les exemples ci-dessus, l'installation **1** est mise en oeuvre pour le moulage de pièces en chocolat. Bien entendu, cette installation pourrait être utilisée pour la mise en forme de toute matière se prêtant au moulage par trempage.

De même, dans les exemples ci-dessus, le fluide de refroidissement est constitué par de l'eau glycolée mais ce fluide pourrait être de toute autre nature appropriée en fonction de la température à laquelle doivent être maintenus les moules. Ainsi, le circuit de refroidissement du bloc **4** pourrait constituer un évaporateur d'une machine frigorifique à l'intérieur duquel circulerait un fluide frigorigène.

De même, le fluide de démoulage utilisé est de l'air sec comprimé, mais ce fluide pourrait également être constitué par un liquide ou un autre gaz selon la nature de la matière moulée.

### POSSIBILITE D'APPLICATION INDUSTRIELLE

L'invention trouve une possibilité d'application industrielle dans les installations industrielles ou semi-industrielles de fabrication de chocolats fourrés.

L'invention n'est pas limitée aux exemples décrits et représentés, car diverses modifications peuvent y être apportées sans sortir de son cadre.

## Revendications

1. Procédé de moulage par trempage du type consistant à :
- plonger ou à tremper temporairement dans un bain de matière fondue au moins un moule (**12**) refroidi par un fluide,
- extraire le moule hors du bain, pour solidifier sur la surface externe du moule une épaisseur de matière formant une pièce moulée,
- et à démouler la pièce en la soumettant à l'action d'un fluide sortant par au moins un orifice débouchant à la surface externe du moule,
**caractérisé en ce qu'**il consiste :
- à refroidir le moule par la circulation, dans un circuit étanche (**14, 18**), d'un fluide réfrigérant,
- et à démouler la pièce au moyen d'un fluide de démoulage fourni par un circuit d'alimentation distinct (**22**, **21**) du circuit étanche pour le fluide réfrigérant.

2. Procédé selon la revendication 1, **caractérisé en ce qu'**il consiste à assurer la circulation du fluide réfrigérant au moins pendant le trempage du moule dans le bain.

3. Procédé selon la revendication 1 ou 2, **caractérisé en ce qu'**il consiste à assurer en continu la circulation du fluide réfrigérant.

4. Procédé selon l'une des revendications 1 à 3, **caractérisé en ce qu'**il consiste à assurer la circulation du fluide réfrigérant en boucle fermée et à refroidir le fluide réfrigérant au moyen d'un échangeur (**35**) en relation avec une installation frigorifique (**36**).

5. Procédé selon l'une des revendications 1 à 4, **caractérisé en ce que** le fluide de démoulage est fourni pendant la phase de démoulage à une pression comprise entre 1,5 x 10⁵ et 5 x 10⁵ Pa.

6. Bloc de moulage pour une installation de moulage par trempage, du type comportant :
- un châssis porteur (**10**) pourvu, sur une face inférieure, d'au moins un moule (**12**) saillant qui possède, au niveau de sa surface externe, des moyens (**19**) de sortie d'un fluide pour le démoulage,
- un circuit de refroidissement dans lequel est destiné à circuler un fluide pour assurer le refroidissement du moule,
- et un circuit d'alimentation en fluide des moyens de sortie,
**caractérisé en ce que**
- le circuit de refroidissement est conçu pour constituer un circuit étanche (**14**) destiné à être raccordé à une source (**26**) de fluide réfrigérant,
- et **en ce que** le circuit d'alimentation (**21**, **22**) forme un circuit distinct du circuit de refroidissement (**14**), et destiné à être raccordé à une source (**29**) de fluide de démoulage.

7. Bloc de moulage selon la revendication 6, **caractérisé en ce qu'**il comporte :
- des moyens d'adaptation amovibles du châssis sur un élément complémentaire (**13**) de l'installation de moulage,
- des moyens **(27**_{**1**}**, 28**_{**1**}) de raccord amovibles, d'une part, du circuit de refroidissement (**14**) avec la source (**26**) de fluide réfrigérant et, d'autre part, du circuit d'alimentation (**21, 22**) avec la source (**29**) de fluide de démoulage.

8. Bloc de moulage selon la revendication 6 ou 7, **caractérisé en ce que** le circuit de refroidissement (**14**) possède une canalisation d'entrée et une canalisation de sortie toutes deux destinées à être raccordées avec la source de fluide réfrigérant pour permettre une circulation en boucle de ce dernier.

9. Bloc de moulage selon l'une des revendications 6 à 8, **caractérisé en ce qu'**il comporte au moins deux moules creux, chaque moule présentant une chambre (**18**) qui communique avec le circuit de refroidissement (**14**) ménagé dans le châssis.

10. Bloc de moulage selon l'une des revendications 6 à 8, **caractérisé en ce qu'**il comporte au moins deux moules pleins.

11. Bloc de moulage selon l'une des revendications 6 à 10, **caractérisé en ce que** les moyens (**19**) de sortie du fluide de démoulage sont constitués par un conduit (**21**) présenté par le moule et raccordé, d'une part, au circuit d'alimentation (**22**) et, d'autre part, à une chambre d'éjection (**20**) obturée au niveau de la surface externe inférieure du moule par une grille de répartition (**24**).

12. Bloc de moulage selon l'une des revendications 6 à 11, **caractérisé en ce que** le châssis porteur (**10**) est au moins partiellement recouvert d'un isolant (**39**), ne couvrant pas les moules, pour limiter l'apparition d'un phénomène de condensation à la surface externe du châssis.

13. Installation de moulage par trempage pour la mise en oeuvre du procédé selon l'une des revendications 1 à 5, **caractérisée en ce qu'**elle comporte un bloc de moulage (**4**) selon l'une des revendications 6 à 12.

14. Installation de moulage par trempage selon la revendication 13, **caractérisée en ce qu'**elle comprend un ensemble de support et de déplacement du bloc de moulage (**4**), constitué par un chariot mobile (**7**) asservi en translation horizontale, qui porte un bras mobile (**5**) asservi en translation verticale et pourvu de moyens (**13**) d'adaptation du bloc (**4**).

## Patentansprüche

1. Verfahren zum Tauchformen, bestehend im:
- vorübergehenden Unter- oder Eintauchen mindestens einer durch ein Fluid gekühlten Form (12) in ein Bad aus geschmolzenem Material,
- Entnehmen der Form aus dem Bad, um auf der Außenseite der Form eine ein Formteil bildende Materialstärke erstarren zu lassen,
- und Entformen des Formteils, indem dieses der Einwirkung eines Fluids ausgesetzt wird, das durch wenigstens eine in die Außenseite der Form mündende Öffnung austritt,
**dadurch gekennzeichnet, dass** es darin besteht,
- die Form durch das Zirkulieren eines Kältefluids in einem dichten Kreislauf (14, 18) zu kühlen,
- und das Formteil mittels eines Entformungsfluids zu entformen, das durch einen Versorgungskreislauf (22, 21) bereitgestellt wird, der von dem dichten Kältefluid-Kreislauf unabhängig ist.

2. Verfahren nach Anspruch 1,
**dadurch gekennzeichnet, dass** es darin besteht, das Zirkulieren des Kältefluids wenigstens während des Eintauchens der Form in das Bad sicherzustellen.

3. Verfahren nach Anspruch 1 oder 2,
**dadurch gekennzeichnet, dass** es darin besteht, das Zirkulieren des Kältefluids kontinuierlich sicherzustellen.

4. Verfahren nach einem Ansprüche 1 bis 3,
**dadurch gekennzeichnet, dass** es darin besteht, das Zirkulieren des Kältefluids in einem geschlossenen Kreislauf sicherzustellen und das Kältefluid mittels Hilfe eines Wärmetauschers (35) in Verbindung mit einer Kälteanlage (36) zu kühlen.

5. Verfahren nach einem der Ansprüche 1 bis 4,
**dadurch gekennzeichnet, dass** das Entformungsfluid während der Entformungsphase mit einem Druck von 1,5 x 10⁵ bis 5 x 10⁵ Pa bereitgestellt wird.

6. Formgusseinheit für eine Tauchformanlage mit:
- einem Traggestell (10), das auf einer Unterseite mit wenigstens einer vorstehenden Form (12) versehen ist, die in Höhe ihrer Außenseite Mittel (19) zum Austreten eines Entformungsfluids aufweist,
- einem Kühlkreislauf, in dem das Zirkulieren eines Fluids zum Kühlen der Form vorgesehen ist,
- und einem Kreislauf zur Fluidversorgung der Austrittsmittel,
**dadurch gekennzeichnet, dass**
- der Kühlkreislauf so konzipiert ist, dass er einen dichten Kreislauf (14) bildet, der dazu bestimmt ist, mit einer Kältefluidquelle (26) verbunden zu sein,
- und der Versorgungskreislauf (21, 22) einen vom Kühlkreislauf (14) unabhängigen Kreislauf bildet und dazu bestimmt, mit einer Entformungsfluidquelle (29) verbunden zu sein.

7. Formgusseinheit nach Anspruch 6,
**dadurch gekennzeichnet, dass** sie umfasst:
- abnehmbare Mittel zum Anpassen des Gestells an ein zusätzliches Element (13) der Formanlage,
- abnehmbare Mittel (27₁, 28₁) zum Verbinden des Kühlkreislaufs (14) mit der Kältefluidquelle (26) einerseits und des Versorgungskreislaufs (21, 22) mit der Entformungsfluidquelle (29) andererseits.

8. Formgusseinheit nach Anspruch 6 oder 7,
**dadurch gekennzeichnet, dass** der Kühlkreislauf (14) eine Zuflussleitung und eine Abflussleitung aufweist, die beide dazu bestimmt sind, mit der Kältefluidquelle verbunden zu sein, um einen geschlossenen Kreislauf des Kältefluids zu ermöglichen.

9. Formgusseinheit nach einem der Ansprüche 6 bis 8,
**dadurch gekennzeichnet, dass** sie wenigstens zwei Hohlformen umfasst, wobei jede Form eine Kammer (18) aufweist, die mit dem in dem Gestell ausgebildeten Kühlkreislauf (14) in Verbindung steht.

10. Formgusseinheit nach einem der Ansprüche 6 bis 8,
**dadurch gekennzeichnet, dass** sie wenigstens zwei Vollformen umfasst.

11. Formgusseinheit nach einem der Ansprüche 6 bis 10,
**dadurch gekennzeichnet, dass** die Mittel (19) zum Austreten des Entformungsfluids von einem Kanal (21) gebildet werden, den die Form aufweist und der einerseits mit dem Versorgungskreislauf (22) und anderseits mit einer Austrittskammer (20) verbunden ist, die in Höhe der unteren Außenseite der Form durch ein Verteilergitter (24) verschlossen ist.

12. Formgusseinheit nach einem der Ansprüche 6 bis 11,
**dadurch gekennzeichnet, dass** das Traggestell (10) wenigstens teilweise mit einem Isoliermaterial (39) überzogen ist, das die Formen jedoch nicht bedeckt, um das Auftreten von Kondensationserscheinungen auf der Außenseite des Gestells zu begrenzen.

13. Tauchformanlage zur Durchführung des Verfahrens nach einem der Ansprüche 1 bis 5, **dadurch gekennzeichnet, dass** sie eine Formgusseinheit (4) nach einem der Ansprüche 6 bis 12 umfasst.

14. Tauchformanlage nach Anspruch 13,
**dadurch gekennzeichnet, dass** sie eine Einheit zum Tragen und Verschieben der Formgusseinheit (4) umfasst, die von einem in horizontaler Translationsbewegung gesteuerten verschiebbaren Wagen (7) gebildet wird, der einen in vertikaler Translationsbewegung beweglichen Arm (5) trägt, der mit Mitteln (13) zum Anpassen der Einheit (4) versehen ist.

## Claims

1. A dip molding method of the type consisting in:
· temporarily plunging or dipping at least one fluid-cooled mold (12) into a bath of molten material;
· extracting the mold from the bath in order to cause a thickness of material to solidify on the outside surface of the mold to form a molding; and
· unmolding the molding by subjecting it to the action of a fluid coming out through at least one orifice opening out into the outside surface of the mold;
the method being **characterized in that** it consists in:
· cooling the mold by causing a cooling fluid to circulate in a sealed circuit (14, 18); and
· unmolding the molding by means of an unmolding fluid supplied by a feed circuit (22, 21) distinct from the sealed circuit for the cooling fluid.

2. A method according to claim 1, **characterized in that** it consists in causing the cooling fluid to circulate at least while the mold is dipped in the bath.

3. A method according to claim 1 or claim 2, **characterized in that** it consists in causing the cooling fluid to circulate continuously.

4. A method according to any one of claims 1 to 3, **characterized in that** it consists in causing the cooling fluid to circulate around a closed loop and in cooling the cooling fluid by means of a heat exchanger (35) in communication with a refrigeration installation (36).

5. A method according to any one of claims 1 to 4, **characterized in that** the unmolding fluid is delivered during the unmolding stage at a pressure lying in the range 1.5×10⁵ Pa to 5×10⁵ Pa.

6. A molding block for a dip molding installation, the block being of the type comprising:
· a load-bearing structure (10) provided on a bottom face with at least one projecting mold (12) which possesses delivery means (19) in its outside surface for delivering an unmolding fluid;
· a cooling circuit in which fluid for cooling the mold is to circulate; and
· a circuit for feeding fluid to the delivery means;
the block being **characterized in that**:
· the cooling circuit is designed to constitute a sealed circuit (14) for connection to a source (26) of cooling fluid; and
· **in that** the feed circuit (21, 22) forms a circuit that is distinct from the cooling circuit (14) and that is designed to be connected to a source (29) of unmolding fluid.

7. A molding block according to claim 6, **characterized in that** it comprises:
· removable means for fitting the load-bearing structure to a complementary element (13) of the molding installation; and
· removable coupling means (27₁, 28₁) for coupling the cooling circuit (14) with the source (26) of cooling fluid, and for coupling the feed circuit (21, 22) with the source (29) of unmolding fluid.

8. A molding block according to claim 6 or claim 7, **characterized in that** the cooling circuit (14) possesses an inlet pipe and an outlet pipe both designed to be coupled with the source of cooling fluid to enable it to circulate in a loop.

9. A molding block according to any one of claims 6 to 8, **characterized in that** it includes at least two hollow molds, each mold presenting a chamber which communicates with the cooling circuit (14) formed in the load-bearing structure.

10. A molding block according to any one of claims 6 to 8, **characterized in that** it includes at least two solid molds.

11. A molding block according to any one of claims 6 to 10, **characterized in that** the unmolding fluid delivery means (19) are constituted by a duct (21) presented by the mold and coupled firstly to the feed circuit (22) and secondly to an ejection chamber (20) closed in the bottom outside surface of the mold by means of a distribution grid (24).

12. A molding block according to any one of claims 6 to 11, **characterized in that** the load-bearing structure (10) is at least partially covered in a insulation (39) that does not cover the molds, so as to limit the occurrence of a condensation phenomenon on the outside surface of said structure.

13. A dip molding installation for implementing the method according to any one of claims 1 to 5, **characterized in that** it includes a molding block (4) according to any one of claims 6 to 12.

14. A dip molding installation according to claim 13, **characterized in that** it includes an assembly for supporting and moving the molding block (4), said assembly being constituted by a moving carriage (7) that is servo-controlled in horizontal translation, the carriage carrying a moving arm (5) that is servo-controlled in vertical translation and that is provided with means (13) for fitting to the block (4).
